# EUROPEAN PATENT SPECIFICATION

(11) **EP 1 517 262 B1**
(45) Date of publication and mention of the grant of the patent: **08.10.2008**
(21) Application number: 04020362.2
(22) Date of filing: 27.08.2004
(51) Int. Cl.: G06K 9/00

(54) **Object recognition system including an adaptive light source**
Objekterkennungssystem mit einer adaptiven Lichtquelle
Système de reconnaissance d'objets avec une source lumineuse adaptative

(30) Priority: 19.09.2003 US 666261
(43) Date of publication of application: 23.03.2005
(73) Proprietor: Sensormatic Electronics Corporation, Boca Raton, Florida 33487 (US)
(72) Inventor: Narlow, Douglas A., Coral Springs, FL 33071 (US)
(74) Representative: Hafner, Dieter

(56) References cited:
- EP-A- 1 167 127
- US-A- 5 801 763
- US-A1- 2003 053 664
- US-A1- 2003 142 853
- US-A1- 2003 169 901

## Description

### FIELD OF THE INVENTION

The present invention relates to object recognition systems and, in particular, to an object recognition system with an adaptive light source for achieving improved feature recognition.

### BACKGROUND

Object recognition systems, such as facial recognition systems, generally include a camera and a computer. In a facial recognition system, for example, the camera captures facial features of a subject as an image and the computer performs related processing of the image. The computer may develop a digital code representative of the captured facial image. The digital code may be developed using a variety of points, distances, and measurements of a person's facial features, e.g., distance between eyes, width of nose, etc. The computer then compares the facial representation of the image to stored facial representations. If an acceptable correlation between two facial representations is obtained, then the system has recognized the obtained facial representation and appropriate action may be taken by the system.

Object recognition systems may be utilized in a variety of applications. One such application is to control access to a secure area. For example, in a facial recognition system a person may be granted or denied access to the secure area based on whether or not an image of the person's face taken by a camera is recognized and correlated to stored data of authorized personnel.

In this and other applications, difficulties may arise in obtaining an accurate image due to lighting conditions at the time an image is captured. In a facial recognition system, for example, the light on a subject's face must establish sufficient contrast to capture an accurate image. If the light is too dark or bright, the captured image may not be properly recognized by the system.

The challenge of establishing appropriate lighting on the subject is compounded when the ambient light includes natural light. When natural light is present, ambient light levels may vary widely based on time of day, weather, season, etc. Wide variations in ambient light can significantly effect the ability to reliably recognize a captured facial image in known systems.

US 2003/0053664 A1 discloses a method and system for use in detecting a face of a person including providing image data representative of reflected light of a scene in at least one bandwidth within a reflected infrared radiation range. The method and system includes a light source controller having a detection device operable to monitor luminance level in the scene and control means to dynamically adjust the luminance level provided by the light source in response thereto.

There is a need for an object recognition system with a light source that adapts to ambient light levels to provide an output for improved detection of object features.

### SUMMARY OF THE INVENTION

According to one aspect of the invention, there is provided an object recognition system including a light source controller configured to control an illumination level of a light source in response to an ambient light level. The system includes a camera configured to capture an image of an object illuminated by the light source. A computer compares data representative of the image to stored image data, wherein said light source controller is configured to establish a first illumination level for said light source when said ambient light is at a first ambient light level, and a second illumination level for said light source when said ambient light is at a second ambient light level, wherein said first illumination level is higher than said second illumination level, and wherein said first ambient light level is higher than said second ambient light level.

According to another aspect of the invention, there is provided a method of illuminating an object in an object recognition system including controlling an illumination level of a light source directed toward the object in response to an ambient light level, wherein said illumination level of said light source is controlled to achieve a first level when said ambient light level is greater than a predetermined light level, said illumination level of said light source is controlled to achieve a second level when said ambient light level is less than said predetermined light level, and wherein said first level is greater than said second level.

### BRIEF DESCRIPTION OF THE DRAWINGS

For a better understanding of the present invention, together with other objects, features and advantages, reference should be made to the following detailed description which should be read in conjunction with the following figures wherein like numerals represent like parts:
FIG. 1 is block diagram of an exemplary object recognition system consistent with the invention;
FIG. 2 is a perspective view of an object recognition system for use in an access control application;
FIG. 3 is a block diagram of a light source controller and light source useful in an object recognition system consistent with the invention;
FIG. 4 is a detailed block diagram showing a light source controller for controlling a light source in an object recognition system consistent with the invention; and
FIG. 5 is a circuit diagram of one embodiment of the light source controller and light source of FIG 4.

### DETAILED DESCRIPTION

For simplicity and ease of explanation, the present invention will be described herein in connection with various exemplary embodiments thereof associated with a facial recognition system. Those skilled in the art will recognize, however, that the features and advantages of the present invention may be implemented in a variety of configurations for use in a variety of object recognition systems. It is to be understood, therefore, that the embodiments described herein are presented by way of illustration, not of limitation.

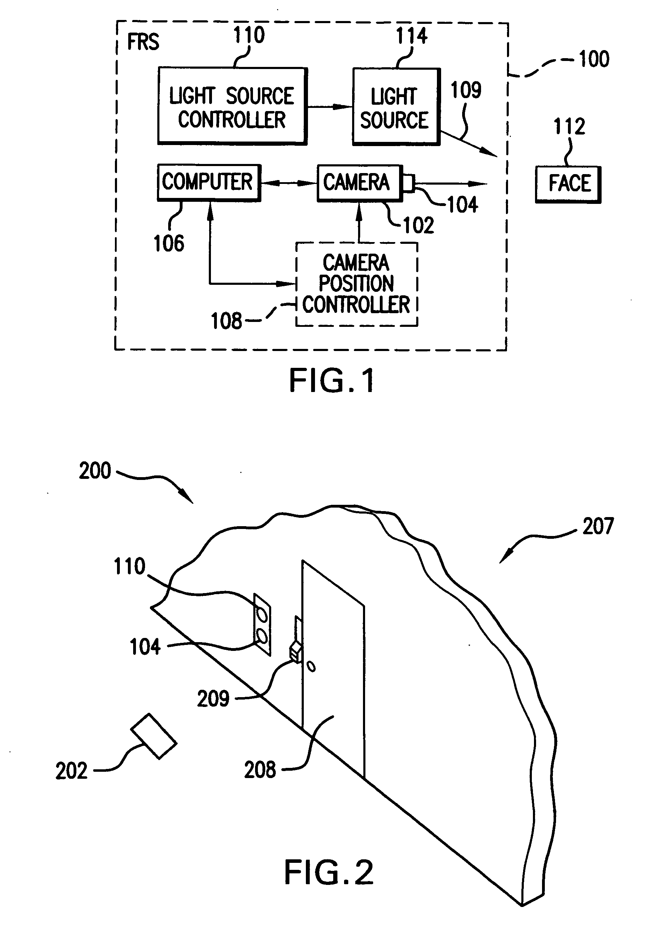

FIG. 1 is a simplified block diagram of a facial recognition system (FRS) 100 consistent with the invention. In general, the FRS 100 may include a camera 102 having a lens 104, a computer 106, a light source controller 110, and a light source 114. The camera 102 may be mounted in a fixed position. Alternatively, a camera position controller 108 may be coupled to the camera 102 for adjusting the pan-tilt-zoom of the camera and/or to position the camera at various viewing angles to account for varying heights of subjects and other conditions

Those skilled in the art will recognize that the camera 102, lens 104, computer 106, and camera position controller 108 may be provided in a variety of known configurations to obtain and analyze a digital image of a person's face or other object. In general, a person steps to a designated area to allow the lens 104 of the camera 102 to focus on the person's face 112. An image of the face 112 may be obtained by the camera 102 and transferred to the computer 106. The computer 106 may then analyze the image data by developing a digital representation of the facial image. The digital representation may be developed by analyzing various points and distances on a person's facial features such as the distance between eyes, width of nose, etc.

The computer 106 may compare the digital representation of the captured image to stored digital facial representations from various persons. If an acceptable correlation between the obtained facial image and a stored facial image is made by the computer 106, then the FRS 100 has recognized the facial image and appropriate action may then be taken by the FRS 100.

An FRS system consistent with the invention may be utilized in a variety of applications. One such application is an access control application, as illustrated in FIG. 2, wherein access to a secure area 207 is controlled by the FRS. The lens 104 of the camera may be positioned in proximity to a secured entrance 208. The light source 114 may be located adjacent the lens 104. In the illustrated exemplary embodiment, the light source 114 is positioned above the lens 104. However, the light source 114 may be located in a variety of positions to illuminate of a person's face when the person stands on a designated area 202.

If the image taken by the camera 102 is recognized by the FRS as being associated with authorized personnel, the FRS may trigger an actuator 209 to unlock the secured entrance 208 thus allowing access to the authorized person. If the image taken by the camera 102 is not recognized by the FRS, or is recognized being associated with unauthorized personnel, the FRS may trigger the actuator 209 to retain the secured entrance 208 in a locked position thus denying access to unrecognized or unauthorized personnel. Since unrecognized personnel are denied access in such instances, it is important that the FRS properly read a facial image taken by the camera 102.

Advantageously, the light source controller 110 assists the FRS in obtaining a readable facial image over a wide range of ambient lighting levels. Referring again to FIG. 1, the light source controller 110 controls the light source 114 to illuminate the person's face 112 with a light beam 109 having an illumination level associated with the ambient light level. In particular, the light source controller 110 may control the light source 114 to illuminate the person's face 112 at a level selected to achieve appropriate contrast on the face to reliably capture an image thereof. If, for example, the system is installed in an area receiving natural light, the illumination level of the light source 114 may be decreased at times when ambient light is below a predetermined level to avoid over-lighting the face, and may be increased at times when the ambient light is above a predetermined level to avoid shadows on the face.

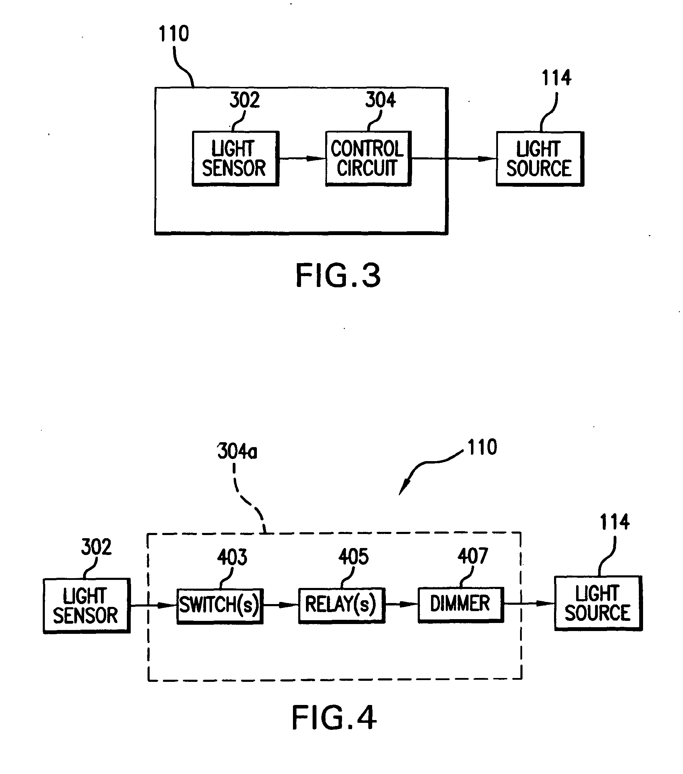

Turning to FIG. 3, there is provided a block diagram of a light source controller 110 and light source 114 consistent with the invention. In general, the light source controller 110 includes a light sensor 302, a control circuit 304. The light sensor 302 senses ambient lighting conditions in an area proximate to the subject's face 112. The control circuit 304 is responsive to the light sensor 302 to adjust the illumination level of the light source 114 to achieve appropriate contrast on the subject's face in view of the sensed ambient light conditions.

The light sensor 302 may be any of a variety of light sensors known in the art, such as a Cds cell. The controller 304 may include a variety of circuit configuration and elements to control the illumination level of the light source 114. The light source 114 may be any of a variety of sources, e.g. lamps, known in the art. In one embodiment, the source may be a Tungsten lamp.

FIG. 4 is a more detailed block diagram of one exemplary light source controller 110 and light source 114 consistent with the invention. In the illustrated exemplary embodiment, the control circuit 304a includes one or more switches 403, one or more relays 405, and a dimmer 407. The dimmer 407 establishes the illumination level of the light source 114, e.g. by establishing the current to the light source. A variety of dimmer configurations will be known to those skilled in the art and are commercially available.

The dimmer 407 may be controlled by a relay 405 that is responsive to a switch 403. The switch 403 may be responsive to the ambient light conditions sensed by the light sensor 302. The switch 403 may have an open and closed state such that the relay 405 is responsive to the position of the switch to position the dimmer 407 in one of two positions to provide two illumination levels from the lamp 306. Those skilled in the art will recognize that a plurality of relays may be provided and/or a plurality of switches may be provided to position the dimmer in a plurality of positions to provide for an associated plurality of illumination levels from the lamp 306.

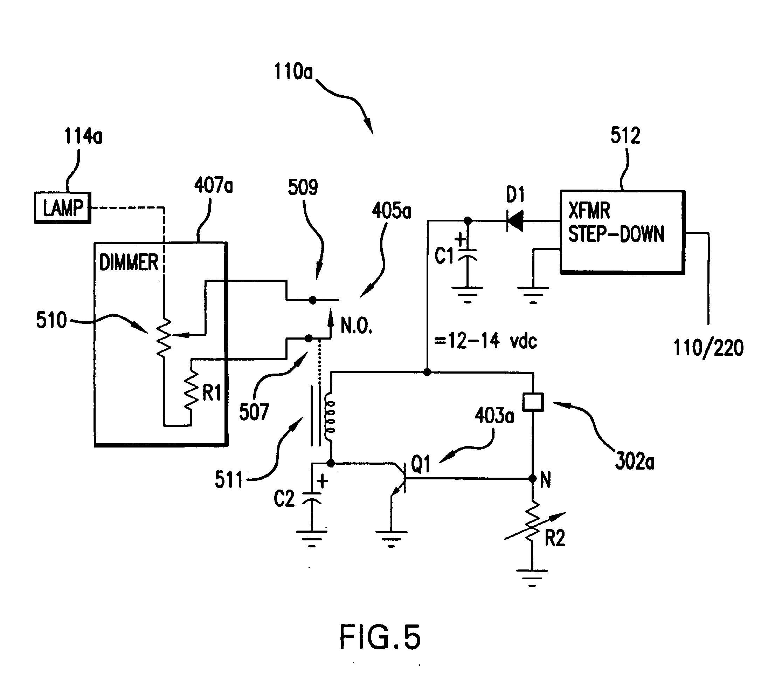

Turning to FIG. 5, a circuit diagram of an exemplary light source controller 110a consistent with the invention is illustrated. In general, the light source controller 110a includes a dimmer 407a, a light sensor 302a, a switch 403a (transistor Q1), and a relay 405a. Additional circuitry to power the relay 405a and the light sensor 302a may be provided. For instance, a step down transformer 512 may provided to step down conventional 120/220 volts AC to a DC supply voltage level, e.g., about 12 to 14 volts DC.

The DC supply voltage may be provided across the Cds cell 302a and variable resistor R2. In the illustrated embodiment, transistor Q1 is a bipolar NPN type transistor with its control or base terminal coupled between the light sensor 302a and R2 at node N. Transistor Q1 is responsive to voltage at node N to act like a switch that is either open (no collector current) or closed (collector current). As will be recognized by those skilled in the art, the Cds cell 302a exhibits a resistance that varies in response to the intensity of light imparted thereon. Thus, the value of R2 may be selected so that when a desired intensity of light is imparted on the Cds cell 302a the voltage at node N is sufficient to place the transistor in a conducting state (switch closed) or non-conducting state (switch open). In the illustrated exemplary embodiment, resistor R2 is configured as a variable resistor to enable adjustment of the threshold light level at which the transistor Q1 moves between conducting (switch closed) and non-conducting (switch open) states. If such threshold is predetermined and the resistance characteristics of the Cds cell 302a are known and stable in the application, resistor R2 may be a non-variable resistor with a set-value to establish a predetermined threshold.

The state of the transistor switch controls the relay 405a, which may include an electromagnet 511 and a set of normally open (N.O.) contacts 507, 509. When the transistor switch Q1 is open, the electromagnet 511 is not energized and hence the armature of the relay 405a is not affected by the electromagnet 511. Accordingly, the normally open contacts 507, 509 remain open. When the transistor switch Q1 is closed, the collector current energizes the electromagnet 511 and the armature of the relay closes the normally open contacts 507, 509.

The position of the relay controls sets the resistance value of the dimmer 407a, which controls the illumination level of the light source, e.g. lamp 114a, by establishing the current to the light source. The dimmer 407a may be a standard, commercially available dimmer modified by the addition of resistor R1 in series with the standard variable resistor 510. When the relay is not energized and the normally open contacts remain open, the dimmer provides a resistance associated with R1 to adjust the lamp 114a to an associated first level of illumination. However, when the relay 405a is energized and the normally open contacts are closed, the dimmer 407a provides a resistance associated with the variable resistor 510 to adjust the lamp 114a to an associated second level of illumination.

The first and second levels of illumination may be adjusted by selection of the values for the variable resistor 510 and the resistor R1. Resistor R1 may be between 0 and 20 kOhms in some embodiments, and in one embodiment may have a value of 3.9 kOhms. The value of the variable resistor may be adjusted to achieve a desired second level of illumination depending on the environmental conditions. In some applications, however, it may be sufficient for the resistor 510 to be a non-variable resistor with a value set to achieve a predetermined second level of illumination.

Those skilled in the art will recognize that a variety of active and/or passive components may be used to achieve a light source controller consistent with the invention. For example, a plurality of light sensors, e.g. Cds cells, may be provided for controlling a plurality of associated switches and relays. Each relay may be responsive to its associated switch and Cds cell to establish an associated illumination level by modification of the current provided to the light source.

## Claims

1. An object recognition system (100) comprising:
a light source controller (110) comprising a light sensor (114), wherein said light source controller (110) is configured to control an illumination level of a light source (114) in response to ambient light;
a camera (102) configured to capture an image of an object illuminated by said light source (114); and
a computer (106) configured to compare data representative of said image to stored image data,
**characterized in that**
said light source controller (110) is configured to establish a first illumination level for said light source (114) when said ambient light is at a first ambient light level, and a second illumination level for said light source (114) when said ambient light is at a second ambient light level, wherein said first illumination level is higher than said second illumination level, and wherein said first ambient light level is higher than said second ambient light level.

2. The object recognition system (100) of claim 1,
**characterized in that**
said light source controller (110) comprises a switch and wherein said level of said ambient light imparted on said light sensor (114) controls a state of said switch (403) to control said illumination level of said light source (114).

3. The object recognition system (100) of claim 2,
**characterized in that**
said controller (110) further comprises at least one relay (405), and wherein said state of said switch (403) controls a state of said at least one relay (405) to control said illumination level of said light source (110).

4. The object recognition system (100) of claim 2,
**characterized in that**
said controller (110) further comprises a dimmer (407), and wherein said state of said switch (403) controls a resistance of said dimmer (407) to control said illumination level of said light source (114).

5. The object recognition system (100) of claim 2,
**characterized in that**
said switch (403) comprises a transistor (403a/Q1).

6. The object recognition system (100) of claim 1,
**characterized in that**
said object comprises a human face (112).

7. A method of illuminating an object in a object recognition system (100), said method comprising:
controlling an illumination level of a light source (114) directed toward said object in response to an ambient light level,
**characterized in that**
said illumination level of said light source (114) is controlled to achieve a first level when said ambient light level is greater than a predetermined light level, said illumination level of said light source (114) is controlled to achieve a second level when said ambient light level is less than said predetermined light level, and wherein said first level is greater than said second level.

8. The method of claim 7,
**characterized in that**
said object comprises a human face (112).

9. The method according to claims 7 and 8,
**characterized in**
its use to control access of an object to a secure area (202).

## Patentansprüche

1. Objekterkennungssystem (100), mit:
einer Lichtquellen-Steuereinheit (110), die einen Lichtsensor (114) enthält, wobei die Lichtquellen-Steuereinheit (110) konfiguriert ist, um einen Beleuchtungspegel einer Lichtquelle (114) in Reaktion auf Umgebungslicht zu steuern;
einer Kamera (102), die konfiguriert ist, um ein Bild eines Objekts, das durch die Lichtquelle (114) beleuchtet wird, aufzunehmen; und
einem Computer (106), der konfiguriert ist, um Daten, die das Bild repräsentieren, mit gespeicherten Bilddaten zu vergleichen,
**dadurch gekennzeichnet, dass**
die Lichtquellen-Steuereinheit (110) konfiguriert ist, um einen ersten Beleuchtungspegel für die Lichtquelle (114) herzustellen, wenn das Umgebungslicht einen ersten Umgebungslichtpegel hat, und um einen zweiten Beleuchtungspegel für die Lichtquelle (114) herzustellen, wenn das Umgebungslicht einen zweiten Umgebungslichtpegel hat, wobei der erste Beleuchtungspegel höher als der zweite Beleuchtungspegel ist und wobei der erste Umgebungslichtpegel höher als der zweite Umgebungslichtpegel ist.

2. Objekterkennungssystem (100) nach Anspruch 1,
**dadurch gekennzeichnet, dass**
die Lichtquellen-Steuereinheit (110) einen Schalter enthält und wobei der Pegel des Umgebungslichts, das auf den Lichtsensor (114) auftrifft, einen Zustand des Schalters (403) steuert, um den Beleuchtungspegel der Lichtquelle (114) zu steuern.

3. Objekterkennungssystem (100) nach Anspruch 2,
**dadurch gekennzeichnet, dass**
die Steuereinheit (110) ferner wenigstens ein Relais (405) enthält und wobei der Zustand des Schalters (403) einen Zustand des wenigstens einen Relais (405) steuert, um den Beleuchtungspegel der Lichtquelle (110) zu steuern.

4. Objekterkennungssystem (100) nach Anspruch 2,
**dadurch gekennzeichnet, dass**
die Steuereinheit (110) ferner einen Dimmer (407) enthält und wobei der Zustand des Schalters (403) einen Widerstand des Dimmers (407) steuert, um den Beleuchtungspegel der Lichtquelle (114) zu steuern.

5. Objekterkennungssystem (100) nach Anspruch 2,
**dadurch gekennzeichnet, dass**
der Schalter (403) einen Transistor (403a/Q1) enthält.

6. Objekterkennungssystem (100) nach Anspruch 1,
**dadurch gekennzeichnet, dass**
das Objekt ein menschliches Gesicht (112) umfasst.

7. Verfahren zum Beleuchten eines Objekts in einem Objekterkennungssystem (100), wobei das Verfahren enthält:
Steuern eines Beleuchtungspegels einer Lichtquelle (114), die auf das Objekt gerichtet ist, in Reaktion auf einen Umgebungslichtpegel,
**dadurch gekennzeichnet, dass**
der Beleuchtungspegel der Lichtquelle (114) so gesteuert wird, dass ein erster Pegel erzielt wird, wenn der Umgebungslichtpegel höher als ein vorgegebener Lichtpegel ist, und der Beleuchtungspegel der Lichtquelle (114) so gesteuert wird, dass ein zweiter Pegel erzielt wird, wenn der Umgebungslichtpegel niedriger als der vorgegebene Lichtpegel ist, wobei der erste Pegel höher als der zweite Pegel ist.

8. Verfahren nach Anspruch 7, **dadurch gekennzeichnet, dass**
das Objekt ein menschliches Gesicht (112) umfasst.

9. Verfahren nach Anspruch 7 und 8, **gekennzeichnet durch**
seine Verwendung, um den Zugriff eines Objekts auf einen gesicherten Bereich (202) zu steuern.

## Revendications

1. Système de reconnaissance d'objets (100) comprenant :
un contrôleur de source lumineuse (110) comportant un capteur de lumière (114), ledit contrôleur de source lumineuse (110) étant configuré pour réguler un niveau d'éclairage d'une source lumineuse (114) en réaction à la lumière ambiante ;
une caméra (102) qui est configurée pour saisir une image d'un objet éclairé par ladite source lumineuse (114) ; et
un ordinateur (106) qui est configuré de façon à comparer des données représentatives de ladite image à des données d'image enregistrées,
**caractérisé en ce que**
ledit contrôleur de source lumineuse (110) est configuré pour établir un premier niveau d'éclairage pour ladite source lumineuse (114) lorsque ladite lumière ambiante se trouve à un premier niveau de lumière ambiante, et un deuxième niveau d'éclairage pour ladite source lumineuse (114) lorsque ladite lumière ambiante se trouve à un deuxième niveau de lumière ambiante, ledit premier niveau d'éclairage étant plus élevé que ledit deuxième niveau d'éclairage, et ledit premier niveau de lumière ambiante étant plus élevé que ledit deuxième niveau de lumière ambiante.

2. Système de reconnaissance d'objets (100) selon la revendication 1,
**caractérisé en ce que**
ledit contrôleur de source lumineuse (110) comporte un interrupteur, ledit niveau de ladite lumière ambiante communiqué audit capteur de lumière (114) commandant un état dudit interrupteur (403) afin de réguler ledit niveau d'éclairage de ladite source lumineuse (114).

3. Système de reconnaissance d'objets (100) selon la revendication 2,
**caractérisé en ce que**
ledit contrôleur (110) comporte en outre un relais (405) au moins, ledit état dudit interrupteur (403) commandant un état dudit au moins un relais (405) afin de réguler ledit niveau d'éclairage de ladite source lumineuse (110).

4. Système de reconnaissance d'objets (100) selon la revendication 2,
**caractérisé en ce que**
ledit contrôleur (110) comporte en outre un gradateur (407), ledit état dudit interrupteur (403) commandant une résistance dudit gradateur (407) afin de réguler ledit niveau d'éclairage de ladite source lumineuse (114).

5. Système de reconnaissance d'objets (100) selon la revendication 2,
**caractérisé en ce que**
ledit interrupteur (403) comporte un transistor (403a/Q1).

6. Système de reconnaissance d'objets (100) selon la revendication 1,
**caractérisé en ce que**
ledit objet comprend un visage humain (112).

7. Procédé d'éclairage d'un objet dans un système de reconnaissance d'objets (100), ledit procédé consistant à :
réguler un niveau d'éclairage d'une source lumineuse (114) laquelle est dirigée vers ledit objet en réaction à un niveau de lumière ambiante,
**caractérisé en ce que**
ledit niveau d'éclairage de ladite source lumineuse (114) est régulé de façon à procurer un premier niveau lorsque ledit niveau de lumière ambiante est supérieur à un niveau de lumière prédéterminé,
ledit niveau d'éclairage de ladite source lumineuse (114) est régulé de façon à procurer un deuxième niveau lorsque ledit niveau de lumière ambiante est inférieur audit niveau de lumière prédéterminé, et
ledit premier niveau est supérieur audit deuxième niveau.

8. Procédé selon la revendication 7,
**caractérisé en ce que**
ledit objet comprend un visage humain (112).

9. Procédé selon les revendications 7 et 8,
**caractérisé par**
son utilisation afin de contrôler l'accès d'un objet à une zone sécurisée (202).
